# EUROPÄISCHE PATENTANMELDUNG

(11) **EP 4 667 187 A1**
(43) Veröffentlichungstag der Anmeldung: **24.12.2025**
(21) Anmeldenummer: 24183820.0
(22) Anmeldetag: 21.06.2024
(51) Int. Cl.: B29C 49/20, B29C 49/04, B29C 49/54, B29K 223/00, B29L 23/00, B29L 31/30

(54) **VERFAHREN ZUR HERSTELLUNG EINER ROHRANORDNUNG**

(71) Anmelder: TI Automotive Technology Center GmbH, 76437 Rastatt (DE)
(72) Erfinder: Leipold, Stefan, 67470 Seltz (FR); Lindow, Manuel, 76593 Gernsbach (DE); Deibel, Florian, 76547 Sinzheim (DE); Kizilay, Irfan, 68799 Reilingen (DE); Stickel, Martin, 76456 Kuppenheim (DE)
(74) Vertreter: Reiser & Partner Patentanwälte mbB

(57) **Zusammenfassung**

Verfahren zur Herstellung einer Rohranordnung (2), welche einen Grundkörper (3) mit zumindest einem Kanal (4) aufweist, wobei dem Kanal (4) zumindest ein Funktionselement (5) zugeordnet ist, wobei das zumindest eine Funktionselement (5) in einer Aussparung (7) einer Blasform (6) positioniert wird, ein schlauchförmiger Vorformling (8) in die Blasform (6) eingeführt wird und durch Blasformen aus dem Vorformling (8) die Rohranordnung (2) erzeugt wird, wobei das Funktionselement (5) wenigstens eine dem Vorformling (8) zugeordnete Öffnung (9) und/oder Vertiefung aufweist, wobei das Blasformen derart erfolgt, dass ein Teilbereich (11) des Vorformlings (8) in die Öffnung (9) und/oder Vertiefung eingeformt und aufgebrochen wird und eine Durchgangsöffnung (10) zwischen dem zumindest einen Kanal (4) und dem Funktionselement (5) gebildet wird.

## Beschreibung

Die Erfindung betrifft ein Verfahren zur Herstellung einer Rohranordnung mittels Blasformen, wobei die Rohranordnung einen Grundkörper mit zumindest einem Kanal aufweist, wobei dem Kanal zumindest ein Funktionselement zugeordnet ist. Des Weiteren betrifft die Erfindung eine Rohranordnung, hergestellt mit einem erfindungsgemäßen Verfahren.

In der Elektromobilität kommen in einer großen Formenvielfalt Rohranordnungen zum Einsatz, um unterschiedliche Medien, insbesondere Temperiermedien zu verschiedenen Komponenten eines Elektrofahrzeugs leiten zu können. Beispielsweise weisen Akkumulatoren eine optimale Leistungsfähigkeit nur innerhalb eines begrenzten Temperaturspektrums auf, sodass es je nach Umgebungstemperatur erforderlich sein kann, die Akkumulatoren zu erwärmen oder zu kühlen. Ebenso ist es erforderlich, eine Fahrgastzelle in Abhängigkeit der Umgebungstemperatur entweder zu kühlen oder zu erwärmen. Durch Rohranordnungen können Temperiermedien mit unterschiedlichen Temperaturen verteilt und verschiedenen Komponenten zugeleitet werden, wie beispielsweise den Akkumulatoren oder einem Wärmetauscher. Ebenso können Rohranordnungen zur Verteilung andersartiger Medien genutzt werden.

Durch den nur begrenzt zur Verfügung stehenden Bauraum in Elektrofahrzeugen besteht die Anforderung, dass die Rohranordnungen besonders kompakt sein sollen, wobei es bekannt ist, verschiedene Funktionselemente direkt in die Rohranordnungen einzubringen.

Des Weiteren ist es bekannt, komplex geformte Rohranordnungen im Blasformverfahren herzustellen, wobei eine Rohranordnung auch mehrere Kanäle aufweisen kann und Funktionselemente an den Öffnungen der Kanäle bereits während des Blasformverfahrens mit der Rohranordnung verbunden werden können. Eine derartige Anordnung ist beispielsweise aus der EP 4 067 048 A1 bekannt.

Beim Blasformverfahren wird ein schlauchförmiger Vorformling in eine Blasform eingebracht, wobei sich der Vorformling beim Blasformen an die Innenwand der Blasformwerkzeuge anlegt, wobei die Blasformwerkzeuge die Außenkontur der Rohranordnung vorgeben. Die Blasform umfasst zumeist zwei Blasformwerkzeuge mit einer Kavität, die relativ zueinander verfahrbar sind, wobei der Vorformling beim Schließen der Blasformwerkzeuge an die Kavität abgepresst wird. Dabei kann die Kavität derart ausgebildet sein, dass die Herstellung hinterschnittiger Bauteile, beispielsweise die Herstellung von Wellrohren im Blasformverfahren erfolgen kann.

Die Rohranordnung kann eine große Formenvielfalt aufweisen und unterschiedlich ausgeformt sein und insbesondere als Glattrohr oder beispielsweise als Wellrohr ausgebildet sein. Die der Rohranordnung zugeordneten Funktionselemente können an unterschiedlichen Positionen über eine Länge der Rohranordnung seitlich hervorstehen und auch Abgänge ausbilden. Sollen Abgänge an der Rohranordnung angeordnet werden, so ist es erforderlich, Durchgänge bzw. Öffnungen in die Rohranordnung einzubringen. Insbesondere müssen dabei Öffnungen in einem Grundkörper der Rohranordnung an den Positionen geschaffen werden, an welchen an dem fertigen Bauteil die Abgänge angeordnet werden sollen. Dies wird im Stand der Technik durch Blindabgänge erzielt, die nach dem Blasformen über nachgeordnete Prozessschritte geöffnet werden, wobei anschließend die Funktionselemente an den Öffnungen fixiert werden können und dann strömungsleitend mit dem Kanal in Verbindung stehen.

Der Erfindung liegt die Aufgabe zugrunde, ein Verfahren zur Herstellung einer Rohranordnung bzw. eine Rohranordnung bereitzustellen, bei welchem/welcher während des Blasformens zumindest ein Abgang aus einem Grundkörper der Rohranordnung geschaffen werden kann.

Diese Aufgabe wird mit den Merkmalen der Ansprüche 1 und 12 gelöst. Auf vorteilhafte Ausgestaltungen nehmen die Unteransprüche Bezug.

Das erfindungsgemäße Verfahren ist zur Herstellung einer Rohranordnung ausgebildet. Die Rohranordnung umfasst einen Grundkörper mit zumindest einem Kanal, wobei dem Kanal zumindest ein Funktionselement zugeordnet ist. Eine Blasform weist eine Aussparung für das zumindest eine Funktionselement auf, wobei das Verfahren vorsieht, dass das zumindest eine Funktionselement zu einer Aussparung einer Blasform positioniert wird und ein schlauchförmiger Vorformling in die Blasform eingeführt wird, durch Blasformen aus dem Vorformling die Rohranordnung erzeugt wird, wobei das Funktionselement wenigstens eine dem Vorformling zugeordnete Öffnung und/oder Vertiefung aufweist, in die durch das Blasformen ein Teilbereich des Vorformlings eingeformt und aufgebrochen wird und eine Durchgangsöffnung zwischen dem zumindest einen Kanal und dem Funktionselement gebildet wird. Des Weiteren ist vorteilhaft, dass während der Durchführung des Blasformverfahrens eine form- und/oder stoffschlüssige Anbindung des Funktionselementes erfolgen kann. Dadurch ist eine einfache und sichere Befestigung des Funktionselementes an dem Grundkörper ermöglicht.

Bei dem erfindungsgemäßen Verfahren ist vorteilhaft, dass durch das Aufbrechen des Vorformlings bzw. Grundkörpers, welches auch als Bersten bezeichnet werden kann, eine Öffnung zwischen dem Funktionselement und dem Grundkörper in der Blasform geschaffen werden kann. Vorteilhafterweise kann dadurch direkt während des Blasformens eine Öffnung für einen Abgang, Abzweig oder dergleichen aus dem Grundkörper geschaffen werden. Somit kann auf das Einbringen eines Blindabgangs verzichtet werden, der nachträglich manuell geöffnet werden muss, um das Funktionselement darin zu befestigen.

Das Funktionselement weist eine Öffnung oder eine Vertiefung auf. Die Öffnung bzw. Vertiefung erlaubt das Einformen bzw. ein Ausbeulen des Vorformlings während des Blasformens in die Öffnung bzw. Vertiefung hinein. Dadurch wird der Vorformling in diesem Bereich besonders gedehnt, wodurch eine Schwachstelle bzw. eine Art Sollbruchstelle in dem Vorformling ausgebildet werden kann. Insbesondere liegt in diesem Bereich mit fortschreitenden Blasformen eine immer dünner werdende Wandstärke des Vorformlings vor. Der Vorformling wird durch das Blasformen in diesem Bereich schließlich aufgebrochen, sodass eine Durchgangsöffnung von dem zumindest einen Kanal in das Funktionselement entsteht. Die durch das Aufbrechen entstehenden Materialabschnitte können für die Herstellung oder Unterstützung einer formschlüssigen und/oder stoffschlüssigen Verbindung fungieren, beispielsweise indem sich diese an das Funktionselement anlegen.

Das zumindest eine Funktionselement kann ein Anschlussbauteil bzw. einen Abgang ausbilden. Diese sind beispielsweise als Stutzen, Verbinder oder Abzweig ausgebildet. Insbesondere können dadurch weitere Komponenten, beispielsweise Rohrleitungen, Ventile und dergleichen an die Rohranordnung angebunden werden. Das Funktionselement kann zumindest einen Hinterschnitt aufweisen. Beispielsweise kann das Funktionselement einen Abgang ausbilden, der winklig oder gebogen ist.

Das Funktionselement kann beispielsweise als Anschlussstutzen ausgebildet sein und beispielsweise einen Schlauchanschluss bilden. Der Schlauchanschluss ermöglicht ein einfaches Verbinden der Anordnung mit einem oder mehreren Schläuchen, durch welche ein Medium in den Grundkörper geleitet werden kann. Das Funktionselement kann ebenso als Adapter, Ventil, Pumpe, Sensor oder dergleichen oder als Teil der vorgenannten Elemente ausgebildet sein.

Das Funktionselement kann beispielsweise als 90-Grad-gebogenes Rohrelement ausgebildet sein. Durch das erfindungsgemäße Verfahren können derartige Funktionselemente problemlos in die Rohranordnung eingebunden werden.

Das Funktionselement kann aus einem Kunststoffmaterial und/oder einem metallischen Werkstoff ausgebildet sein. Die Verwendung anderer Materialien ist ebenso denkbar, ebenso eine Verbundkonstruktion.

Während des Blasformens kann durch das Einformen und Aufbrechen des Vorformlings eine Art Vorsprung oder dergleichen aus dem geborstenen Material als Element für eine spätere stoff- und/oder formschlüssige Verbindung zwischen dem zumindest einen Funktionselement und dem Grundkörper ausgeformt werden.

Dadurch kann das Funktionselement fest und mediendicht in der Rohranordnung angeordnet werden.

Beispielsweise kann das Funktionselement mit dem Grundkörper der Rohranordnung auch nach dem Blasformen verschweißt werden, um eine stoffschlüssige Verbindung auszubilden. Bei einer stoffschlüssigen Anbindung ist das Funktionselement mediendicht an den Grundkörper der Rohranordnung angebunden.

Zumindest bei einer formschlüssigen Anbindung eines Funktionselementes an den Grundkörper der Rohranordnung kann zur Verbesserung der Dichtheit zwischen dem Funktionselement und dem Grundkörper der Rohranordnung zumindest ein Dichtelement, wie beispielsweise ein O-Ring, vorgesehen sein.

Eine erfindungsgemäße Rohranordnung ist nach dem beschriebenen Verfahren erhältlich. Die Funktionselemente können Anschlussbauteile bzw. Abgänge mit einer komplexen Geometrie sein.

Eine bevorzugte Weiterbildung des Verfahrens kann vorsehen, dass ein Blasformdruck, eine Blasformtemperatur und/oder eine Temperatur des Vorformlings in Abhängigkeit von dem Einformen und Aufbrechen des Teilbereichs des Vorformlings eingestellt wird.

Das Aufbrechen oder ein Bersten des Vorformlings innerhalb der Öffnung oder der Vertiefung kann durch die Einstellung eines entsprechenden Berstdrucks erzeugt werden, der insbesondere an das Material und/oder die Wandstärke des Vorformlings sowie insbesondere an die Größe und/oder Form der Öffnung bzw. Vertiefung angepasst werden kann.

Gemäß einer vorteilhaften Ausführungsform kann sich der innerhalb der Öffnung aufgebrochene Teilbereich des Vorformlings an die Innenwand des Funktionselementes anlegen. Dadurch kann ein Kontaktbereich, bzw. eine Kontaktfläche ausgebildet werden, an welchem oder an welcher eine stoffschlüssige oder formschlüssige Verbindung ausgebildet werden kann. Des Weiteren kann der Teilbereich eine Art Stutzen ausbilden, der durch Anlegen des geborstenen Vorformlings an einen Innenwandabschnitt des Funktionselementes geformt wird. Durch den Stutzen kann beispielsweise eine Positionierung zwischen dem Funktionselement und dem Vorformling bzw. Grundkörper erfolgen, welche für eine spätere Verschweißung vorteilhaft sein kann.

Gemäß einer vorteilhaften Ausführungsform kann das Funktionselement einen Flanschabschnitt aufweisen, der beim Einlegen des Funktionselementes in die Blasform an einer Innenfläche der Blasform anliegt. Während des Blasformens kann der Flanschabschnitt von dem Vorformling kontaktiert werden. Der Flanschabschnitt kann beispielsweise als eine ovale, runde, rechteckige oder quadratische Fläche an dem Funktionselement ausgebildet sein. Der Flanschabschnitt ist insbesondere parallel zu der Blasform ausgebildet, sodass der Flanschabschnitt nach der Fertigung durch das Blasformen parallel zu dem Grundkörper angeordnet sein kann. Bei Auswahl entsprechender Materialien des Funktionselementes und des Vorformlings kann beispielsweise im Bereich des Flanschabschnittes eine stoffschlüssige Verbindung zwischen dem Funktionselement und dem Grundkörper während des Blasformens ausgebildet werden.

Dabei können insbesondere die Glasübergangstemperaturen der Materialien des Vorformlings und des Funktionselementes entsprechend aufeinander abgestimmt sein. Vorzugsweise kann der Vorformling aus einem Material bestehen, das eine geringere Glasübergangstemperatur aufweist als das Material des Funktionselementes. Ebenso kann das Funktionselement aus einem Material bestehen, das eine geringere Glasübergangstemperatur aufweist als das Material des Vorformlings. Es versteht sich, dass das Funktionselement und der Vorformling auch aus einem Material bestehen können, das eine etwa gleiche Glasübergangstemperatur aufweist.

Vorteilhafterweise kann durch den Flanschabschnitt das Funktionselement während und nach dem Blasformen an der Position gehalten werden, an welcher dieses mit dem Grundkörper stoffschlüssig verbunden werden soll.

Der Flanschabschnitt weist insbesondere die Öffnung oder Vertiefung auf, in welche das Material des Vorformlings eingeformt wird.

Gemäß einer vorteilhaften Ausführungsform kann der Flanschabschnitt an die Form des Kanals angepasst sein, sodass durch das Blasformen ein bevorzugt bündiger Übergang zwischen dem Grundkörper und dem Funktionselement ausgebildet wird. Der Flanschabschnitt kann gebogen ausgeführt und insbesondere an einen Radius des Kanals angepasst sein. Insbesondere kann der Flanschabschnitt als Halbschale bzw. Teilschale ausgebildet sein. Mit anderen Worten kann der Flanschabschnitt eine gekrümmte Ebene ausbilden, die an die Form des Grundkörpers und/oder die Form der Rohranordnung angepasst ist.

Gemäß einer vorteilhaften Ausführungsform kann die Blasform an der Innenfläche eine Vertiefung aufweisen und der Flanschabschnitt des Funktionselementes in die Vertiefung eingesetzt werden. Die Vertiefung kann als Positionierung für das Funktionselement dienen. Dabei können auch verschiedene Vertiefungen entlang der Rohranordnung vorgesehen sein, um verschieden geformte Funktionselemente anzuordnen. Die Vertiefung kann daher eine Zuordnung unterschiedlicher Funktionselemente an gewünschten Positionen entlang der Rohranordnung ermöglichen.

Gemäß einer vorteilhaften Ausführungsform kann die Form der Vertiefung an die Form des Flanschabschnittes angepasst sein, sodass das Funktionselement während des Blasformens in der Vertiefung gehalten wird. Insbesondere bildet die Vertiefung eine Negativform des Flanschabschnittes aus, sodass dieser zumindest teilweise formschlüssig in der Vertiefung gehalten werden kann. Dabei können weiterhin Halteelemente oder dergleichen vorgesehen sein, um den Flanschabschnitt, d. h. insbesondere den Flanschabschnitt mit dem Funktionselement, in der Blasform zu halten und/oder zu positionieren.

Gemäß einer vorteilhaften Ausführungsform kann das Funktionselement ein Material umfassen oder durch ein Material gebildet sein, das eine Glasübergangstemperatur aufweist, die in einem für das Blasformen des Vorformlings erforderlichen Temperaturbereich liegt. Insbesondere können die Glasübergangstemperaturen auch derart gewählt sein, dass ein Erweichen des Vorformlings ermöglicht, jedoch ein Schmelzen des Funktionselementes verhindert wird. Vorzugsweise ist das Funktionselement aus einem Polymermaterial ausgebildet. Als Material kommen vorzugsweise Kunststoffe wie thermoplastische Polymere oder thermoplastische Elastomere zum Einsatz. Dabei ist das Material des Funktionselementes insbesondere derart ausgewählt, dass das Funktionselement während des Blasformens formstabil ist. Vorteilhafterweise liegt die Glasübergangstemperatur des für das Funktionselement gewählten Kunststoffs daher oberhalb der für das Blasformen des Vorformlings erforderlichen Temperatur. In einer weiteren Ausführung kann das Funktionselement aus metallischem Werkstoff, aus keramischem Werkstoff oder aus Glas ausgebildet sein.

Gemäß einer vorteilhaften Ausführungsform kann an dem zumindest einen Funktionselement, bevorzugt an dem Flanschabschnitt, wenigstens eine dem Vorformling zugeordnete Ausnehmung vorgesehen sein, in welche ein Abschnitt des Vorformlings durch das Blasformen eingeformt wird, um eine stoffschlüssige und/oder formschlüssige Verbindung zwischen dem Vorformling und dem zumindest einen Funktionselement auszubilden. Insbesondere können mehrere Ausnehmungen an dem zumindest einen Funktionselement, bevorzugt an dem Flanschabschnitt, vorgesehen sein, die vorzugsweise beabstandet zueinander und/oder in einer die Öffnung des Funktionselementes umgebenden Anordnung vorgesehen sind. Die wenigstens eine Ausnehmung kann als Durchbrechung und/oder als Vertiefung an dem zumindest einen Funktionselement, bevorzugt an dem Flanschabschnitt, ausgebildet sein, sodass ein Abschnitt des Vorformlings durch das Blasformen in die Durchbrechung und/oder Vertiefung eingeformt wird. Durch das Einformen des Abschnittes des Vorformlings in die wenigstens eine Ausnehmung kann zwischen dem zumindest einen Funktionselement und dem Vorformling eine besonders stabile formschlüssige Verbindung, beispielsweise bezüglich eines Verdrehens der beiden Komponenten zueinander, ausgebildet werden.

Gemäß einer vorteilhaften Ausführungsform kann an dem zumindest einen Funktionselement, bevorzugt an dem Flanschabschnitt, wenigstens ein dem Vorformling zugeordneter Vorsprung ausgebildet sein, an welchen ein Abschnitt des Vorformlings durch das Blasformen angeformt wird, um eine stoffschlüssige und/oder formschlüssige Verbindung zwischen dem Vorformling und dem zumindest einen Funktionselement auszubilden. Der wenigstens eine Vorsprung ist vorzugsweise an einer dem Vorformling zugewandten Seite des Flanschabschnittes ausgebildet. Insbesondere kann der wenigstens eine Vorsprung ausgestaltet sein, die Öffnung des Funktionselementes zu umgeben. Bevorzugt ist der wenigstens eine Vorsprung rippenförmig oder stegförmig an einer dem Vorformling zugewandten Seite des Flanschabschnittes ausgestaltet und umgibt die Öffnung des zumindest einen Funktionselementes bevorzugt kreisförmig. Vorteilhaft können mehrere solcher bevorzugt kreisförmigen Vorsprünge ausgebildet sein, die unterschiedliche Durchmesser aufweisen und die Öffnung vorzugsweise konzentrisch umgeben.

Durch den wenigstens einen Vorsprung kann insbesondere ein Schweißabschnitt, bevorzugt eine Schweißrippe, ausgebildet sein, die durch das Blasformen eine stoffschlüssige Verbindung mit dem Vorformling ausbildet. Hierzu kann der Vorsprung ein Material umfassen oder durch ein Material gebildet sein, das eine Glasübergangstemperatur aufweist, die auf einen Temperaturbereich für das Blasformen des Vorformlings abgestimmt ist. Insbesondere können die Glasübergangstemperaturen des Materials des wenigstens einen Vorsprungs und des Materials des Vorformlings derart abgestimmt sein, dass durch das Blasformen ein Erweichen, bevorzugt ein zumindest bereichsweises Schmelzen, zumindest des wenigstens einen Vorsprungs auftritt, um die stoffschlüssige Verbindung zwischen dem zumindest einen Funktionselement und dem Vorformling auszubilden. Auf diese Weise kann durch das Blasformen eine mediendichte Verbindung zwischen dem zumindest einen Funktionselement und dem Vorformling ausgebildet werden.

Gemäß einer vorteilhaften Ausführungsform kann die Aussparung zwischen wenigstens zwei Werkzeughälften der Blasform ausgebildet sein, sodass das Funktionselement zwischen den wenigstens zwei Werkzeughälften gehalten wird. Dadurch kann besonders vorteilhaft ein beliebig geformtes Funktionselement zwischen die wenigstens zwei Werkzeughälften der Blasform eingesetzt werden, wobei das Funktionselement zumindest abschnittsweise einem größeren Durchmesser als die Aussparung bzw. größere Abmessungen als die Aussparung aufweisen kann. Die wenigstens zwei Werkzeughälften bilden insbesondere Blasformwerkzeuge mit einer entsprechenden Kavität zur Formgebung des Grundkörpers aus. Dabei kann das Funktionselement einer Werkzeughälfte zugeordnet sein und insbesondere in der Kavität einer Werkzeughälfte aufgenommen sein.

Gemäß einer vorteilhaften Ausführungsform kann der Grundkörper durch das Blasformen als ein Wellrohr ausgebildet werden. In einer derartigen Ausführungsform kann ein Abschnitt, in welchem das Funktionselement angeordnet wird, nicht gewellt ausgeformt werden. Dadurch kann beispielsweise besonders vorteilhaft ein Flanschabschnitt in diesem Bereich angeordnet werden. In einer weiteren Ausführung kann das Wellrohr auch im Bereich des Funktionselementes gewellt ausgeführt sein, wobei der Flanschabschnitt beispielsweise an die Wellenform angepasst sein kann.

Gemäß einer vorteilhaften Ausführungsform kann durch das Funktionselement ein Anschluss und/oder ein Abzweig von dem Kanal ausgebildet werden. Vorteilhaft kann das Funktionselement als Abgang ausgebildet sein. In einer derartigen Ausführungsform kann das Funktionselement eine Durchgangsöffnung aufweisen, sodass ein Zu- und/oder Abfluss an einer beliebigen Position in der Rohranordnung ausgebildet werden kann. Das Funktionselement kann vorzugsweise durch ein Spritzgussverfahren hergestellt sein. Das Funktionselement kann auch durch Blasformen, Kalandrieren oder Pressen hergestellt sein. In einer derartigen Ausführungsform ist das Funktionselement insbesondere aus einem Kunststoff ausgebildet.

Einige Ausführungsbeispiele der erfindungsgemäßen Rohranordnung und des Verfahrens zur Herstellung der Rohranordnung werden anhand der nachfolgenden Figuren gezeigt. Diese zeigen, jeweils schematisch:
Fig. 1 eine Rohranordnung;
Fig. 2 ein Verfahren zur Herstellung der Rohranordnung;
Fig. 3 eine Weiterbildung der Rohranordnung;
Fig. 4 eine Schnittansicht der Rohranordnung gemäß Fig. 3;
Fig. 5 ein Funktionselement der Rohranordnung gemäß Fig. 3.

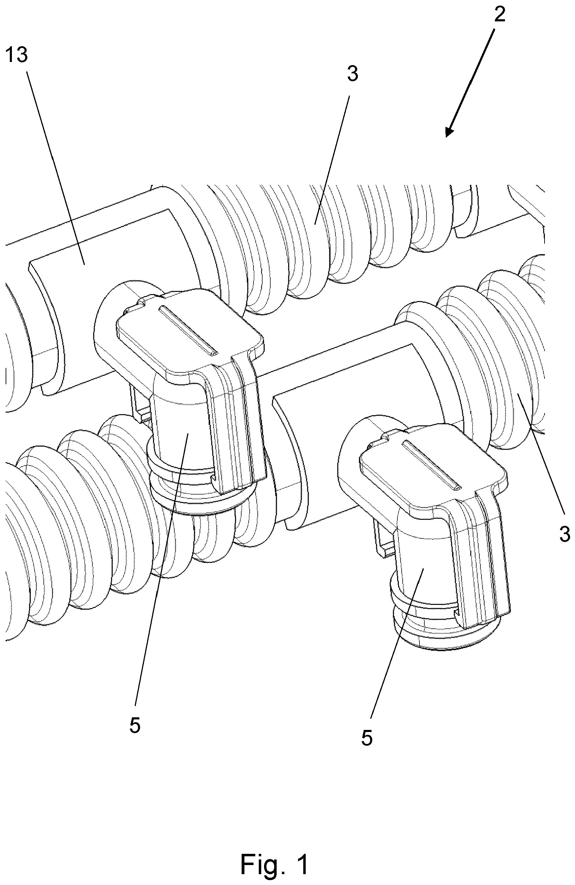

**Fig.** 1 zeigt eine perspektivische Ansicht einer Rohranordnung 2, insbesondere für den Transport von Medien. Die Rohranordnung 2 kann beispielsweise in einem Temperierkreislauf eines Elektrofahrzeugs zum Einsatz gelangen. Über die Rohranordnung 2 können Temperiermedien oder auch andere Medien verteilt und zu den zu temperierenden oder sonstigen beliebigen Einrichtungen, beispielsweise den Akkumulatoren, den Elektromotoren, der Leistungselektronik oder den Wärmetauschern der Fahrgastzellentemperierung, geleitet werden.

Die Rohranordnung 2 umfasst einen Grundkörper 3, welcher als Blasformteil ausgebildet ist. An dem Grundkörper 3 sind ein oder mehrere Funktionselemente 5 angeordnet, wobei die Funktionselemente 5 Abgänge ausbilden können, die an unterschiedlichen Positionen entlang einer Länge der Rohranordnung 2 beispielsweise Abzweige oder Verbindungselemente ausbilden können.

Die Funktionselemente 5 können zylindrisch ausgebildet sein und/oder einen 90-Grad-Winkel aufweisen. An den Funktionselementen können Halteelemente, wie Klipsverschlüsse oder Haken, vorgesehen sein.

Der Grundkörper 3 sowie die Funktionselemente 5 können aus einem Polymermaterial ausgebildet sein, wie beispielsweise Polypropylen. Andere Materialien sind ebenso denkbar.

Die Funktionselemente 5 können durch ein Spritzgussverfahren hergestellt sein, wobei der Kunststoff für die Funktionselemente 5 derart ausgebildet sein kann, dass die Glasübergangstemperatur in einem Bereich der für die Formgebung des Grundkörpers 3 im Blasformverfahren erforderlichen Temperatur liegt. Alternativ können die Funktionselemente 5 durch Blasformen, Kalandrieren oder Pressen hergestellt sein.

Beispielsweise können die Funktionselemente 5 während des Blasformverfahrens durch Auswahl einer entsprechenden Glasübergangtemperatur bereits stoffschlüssig mit dem Grundkörper 3 verbunden werden. Alternativ kann der Grundkörper auch mit den Funktionselementen 5 verschweißt werden, um eine stoffschlüssige Verbindung herzustellen.

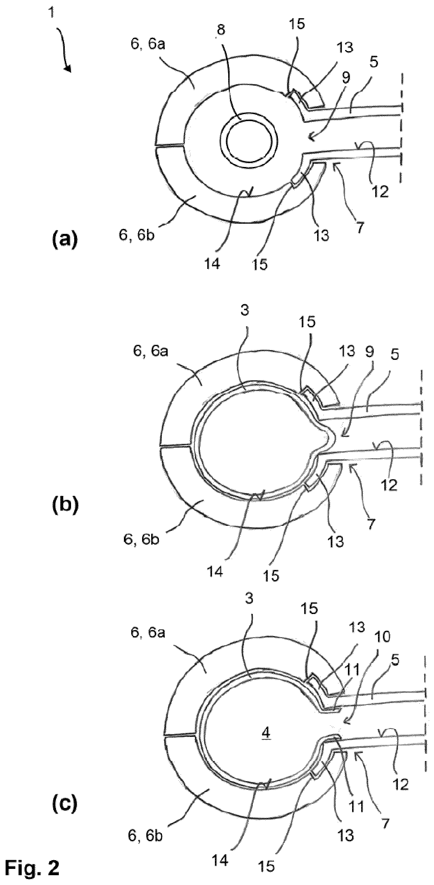

Nach dem Blasformen, und nach einer Verbindung durch einen eventuellen Schweißprozess, sind die Funktionselemente 5 insbesondere direkt, stoffschlüssig mit dem Grundkörper 3 verbunden, wobei eine strömungsleitende Verbindung mit dem Kanal 4 im Innern des Grundkörpers 3, siehe **Fig. 2 (c)**, ausgebildet werden kann. Durch den Stoffschluss sind die Funktionselemente 5 vorteilhafterweise mediendicht mit dem Grundkörper 3 verbunden.

Eine Positionierung des Funktionselementes 5 an dem Grundkörper 3 kann insbesondere dadurch erreicht werden, dass sich das aufgebrochene bzw. geborstene Material entlang des Funktionselementes 5 derart anlegt, dass es an die Form eines Innenwandabschnittes 12 des Funktionselementes 5 angepasst wird und damit eine flächige Kontaktierung ermöglicht, wie beispielhaft in **Fig. 2 (c)** gezeigt.

**Fig. 2** zeigt daher eine schematische Ansicht eines Ablaufs eines offenbarungsgemäßen Verfahrens 1. Das Verfahren 1 ist zur Herstellung einer Rohranordnung 2 ausgelegt, wie diese beispielsweise in **Fig. 1** gezeigt ist. Eine dabei verwendete Blasform 6 weist zumindest eine Aussparung 7 für das zumindest eine Funktionselement 5 auf, wobei zunächst das zumindest eine Funktionselement 5 in der Aussparung 7 positioniert und anschließend ein schlauchförmiger Vorformling 8 in die Blasform 6 eingeführt wird, siehe Fig. 2 (a). Der Vorformling 8 ist insbesondere ein extrudiertes, schlauchförmiges Element, das einen polymeren Werkstoff enthält oder aus diesem ausgebildet ist.

Durch Blasformen kann aus dem Vorformling 8 die Rohranordnung 2 erzeugt werden. Das Funktionselement 5 weist in der dargestellten Ausführungsform eine Öffnung 9 auf, kann jedoch auch eine Vertiefung aufweisen. Während des Blasformens stülpt sich der Vorformling 8 in die Öffnung 9 bzw. Vertiefung hinein, wie in **Fig. 2 (b)** gezeigt. Durch die dadurch entstehende Schwachstelle aufgrund einer abnehmenden Wandstärke bricht bzw. birst der Vorformling 8 im Bereich der Öffnung 9, sodass eine Durchgangsöffnung 10 von dem zumindest einen Kanal 4 in das Funktionselement 5 ausgebildet wird, siehe **Fig. 2 (c)****.** Ein aufgebrochener Teilbereich 11 des Vorformlings 8 legt sich daher an den Innenwandabschnitt 12 des Funktionselementes 5 an. Durch den Teilbereich 11 kann eine Art Stutzen ausgebildet werden, der in Form und/oder Durchmesser an die Öffnung 9 des Funktionselementes 5 angepasst ist. Das Funktionselement 5 kann in einem weiteren Schritt stoff- und/oder formschlüssig mit der Rohranordnung 2 verbunden werden, beispielsweise durch ein Schweißverfahren.

Das Funktionselement 5 kann einen Flanschabschnitt 13 aufweisen, der entsprechend der Blasform 6 bzw. des späteren Grundkörpers 3 gebogen ausgebildet ist. Der Flanschabschnitt 13 kann eine Innenfläche 14 der Blasform 6 kontaktieren, wenn das Funktionselement 5 in die Blasform 6 eingelegt ist.

Beispielsweise kann das Funktionselement 5 zwischen die Werkzeughälften 6a, 6b der Blasform 6 eingelegt werden, wobei ebenso jede der Werkzeughälften 6a, 6b eine Vertiefung 15 aufweisen kann. Des Weiteren kann jede der Werkzeughälften 6a, 6b der Blasform 6 einen Teil der Aussparung 7 aufweisen.

Durch das Verfahren 1 kann demnach ein Blasformteil hergestellt werden, das beispielsweise auch als blasgeformtes Wellrohr ausgeformt sein kann. Durch das Verfahren 1 können Durchgangsöffnungen 10 in dem Vorformling 8 bzw. dem Grundkörper 3 für Funktionselemente 5 erzeugt werden. Vorteilhafterweise legt sich dazu der Vorformling 8 während des Blasformens an das Funktionselement 5, insbesondere an den Flanschabschnitt 13, an, formt bzw. stülpt sich in die Öffnung 9 des Funktionselementes 5 hinein und bricht bzw. birst schließlich in diesem Bereich, sodass eine Verbindung zwischen dem Kanal 4 und dem Funktionselement 5 entsteht. So kann direkt während des Blasformens ein Abgang, Abzweig oder dergleichen aus dem Grundkörper ausgebildet werden, wobei auf das Einbringen eines Blindabgangs, der nachträglich in einem eigenen Prozessschritt geöffnet werden muss, verzichtet werden kann. Des Weiteren kann eine stoffschlüssige Verbindung zwischen dem Funktionselement und dem Grundkörper der Rohranordnung, beispielsweise durch Verschweißen oder durch die Wahl entsprechender Glasübergangstemperaturen der Materialien des Funktionselementes 5 und des Vorformlings 8, hergestellt werden.

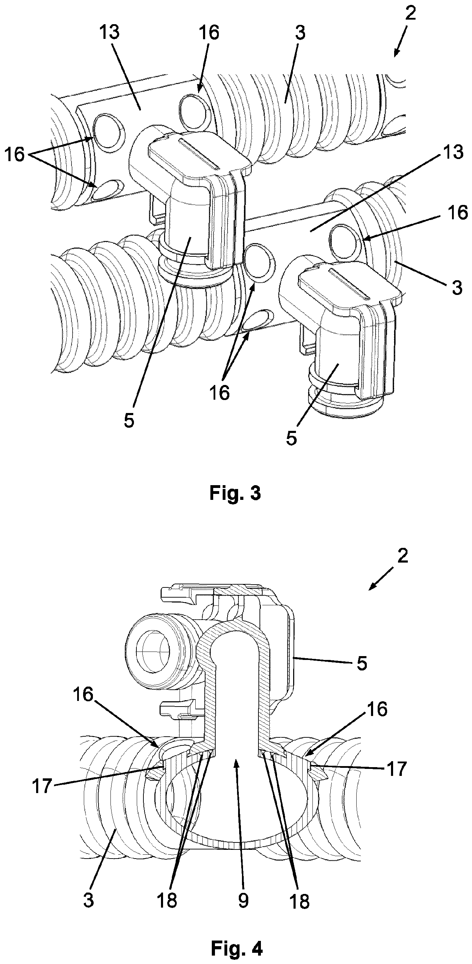

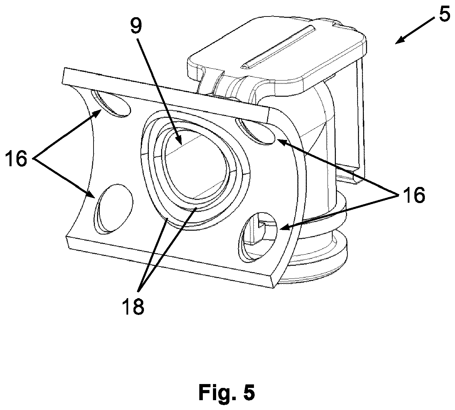

**Fig. 3** zeigt eine perspektivische Ansicht einer Weiterbildung der Rohranordnung 2, **Fig. 4** zeigt eine perspektivische Schnittansicht der Rohranordnung 2 gemäß **Fig. 3** und **Fig. 5** zeigt eine perspektivische Ansicht des Funktionselementes 5 der Rohranordnung 2 gemäß **Fig. 3****.**

Bei dieser Weiterbildung der Rohranordnung 2 sind an dem Flanschabschnitt 13 des Funktionselementes 5 mehrere Ausnehmungen 16 ausgebildet. Gemäß der Darstellung sind an dem Flanschabschnitt 13 vier Ausnehmungen 16 ausgebildet. Ebenso können an dem Flanschabschnitt 13 auch nur eine, zwei oder drei Ausnehmungen 16 oder auch mehr als vier Ausnehmungen 16 ausgebildet sein.

Die Ausnehmungen 16 sind jeweils als Durchbrechungen oder als Löcher ausgebildet und durchdringen den Flanschabschnitt 13 des Funktionselementes 5. Alternativ können die Ausnehmungen 16 ebenso als Vertiefungen ausgebildet sein, die auf einer dem Vorformling 8 zugewandten Seite des Flanschabschnittes 13 ausgebildet sind. Die Ausnehmungen 16 sind beabstandet zueinander an dem Flanschabschnitt 13 angeordnet und umgeben die Öffnung 9 des Funktionselementes 5.

Durch die Ausnehmungen 16 am Flanschabschnitt 13 des Funktionselementes 5 wird erreicht, dass zu den Ausnehmungen 16 korrespondierende Abschnitte des Vorformlings 8 durch das Blasformen in die Ausnehmungen 16 eingeformt werden, sodass zwischen dem Vorformling 8 und dem Funktionselement 5 eine formschlüssige Verbindung ausgebildet wird.

An jeder der Ausnehmungen 16 kann jeweils eine Hinterschneidung 17 ausgebildet sein, wobei der Vorformling 8 durch das Blasformen in die Hinterschneidung 17 eingeformt wird, wie dies insbesondere in Fig. 4 ersichtlich ist. Die Hinterschneidung 17 kann beispielsweise als ein Absatz, eine Nut, eine Rille oder dergleichen an einem Innwandabschnitt der jeweiligen Ausnehmung 16 ausgebildet sein. Durch das Einformen des Vorformlings 8 in die Ausnehmungen 16 kann eine besonders stabile formschlüssige Verbindung zwischen dem Vorformling 8 und dem Funktionselement 5 ausgebildet werden.

Wie in den Fig. 4 und 5 ersichtlich ist, sind an dem Flanschabschnitt 13 des Funktionselementes 5 zwei kreisförmige Vorsprünge 18 ausgebildet, welche die Öffnung 9 des Funktionselementes 5 konzentrisch umgeben. Die Vorsprünge 18 sind an einer dem Vorformling 8 zugewandten Seite des Flanschabschnittes 13 ausgebildet.

Die Vorsprünge 18 sind jeweils rippenförmig ausgebildet. Vorzugsweise weisen die Vorsprünge 18 jeweils einen dreieckförmigen Querschnitt auf. Der Querschnitt ist jedoch nicht auf einen solchen dreieckförmigen Querschnitt beschränkt und kann ebenso rechteckförmig, halbkreisförmig oder dergleichen ausgebildet sein.

Die Vorsprünge 18 bilden insbesondere Schweißrippen, die durch das Blasformen eine stoffschlüssige Verbindung mit dem Vorformling 8 ausbilden. Hierzu können die Glasübergangstemperaturen des Materials der Vorsprünge 18 und des Materials des Vorformlings 8 in der Weise aufeinander abgestimmt sein, dass insbesondere die Vorsprünge 18 durch das Blasformen zumindest bereichsweise aufgeschmolzen werden und eine stoffschlüssige Verbindung mit dem Vorformling 8 ausbilden. Auf diese Weise kann eine mediendichte Verbindung zwischen dem Funktionselement 5 und dem Vorformling 8 ausgebildet werden.

## Patentansprüche

1. Verfahren zur Herstellung einer Rohranordnung (2), welche einen Grundkörper (3) mit zumindest einem Kanal (4) aufweist, wobei dem Kanal (4) zumindest ein Funktionselement (5) zugeordnet ist, wobei das zumindest eine Funktionselement (5) in einer Aussparung (7) einer Blasform (6) positioniert wird, ein schlauchförmiger Vorformling (8) in die Blasform (6) eingeführt wird und durch Blasformen aus dem Vorformling (8) die Rohranordnung (2) erzeugt wird, wobei das Funktionselement (5) wenigstens eine dem Vorformling (8) zugeordnete Öffnung (9) und/oder Vertiefung aufweist, wobei das Blasformen derart erfolgt, dass ein Teilbereich (11) des Vorformlings (8) in die Öffnung (9) und/oder Vertiefung eingeformt und aufgebrochen wird und eine Durchgangsöffnung (10) zwischen dem zumindest einen Kanal (4) und dem Funktionselement (5) gebildet wird.

2. Verfahren nach Anspruch 1, **dadurch gekennzeichnet, dass** sich der innerhalb der Öffnung (9) aufgebrochene Teilbereich (11) des Vorformlings (8) an die Innenwand (12) des Funktionselementes (5) anlegt.

3. Verfahren nach Anspruch 1 oder 2, **dadurch gekennzeichnet, dass** das Funktionselement (5) einen Flanschabschnitt (13) aufweist, der sich beim Einlegen des Funktionselementes (5) in die Blasform (6) an einer Innenfläche (14) der Blasform (6) anlegt.

4. Verfahren nach Anspruch 3, **dadurch gekennzeichnet, dass** der Flanschabschnitt (13) an die Form des Kanals (4) angepasst ist, sodass durch das Blasformen ein bevorzugt bündiger Übergang zwischen dem Grundkörper (3) und dem Funktionselement (5) ausgebildet wird.

5. Verfahren nach Anspruch 3 oder 4, **dadurch gekennzeichnet, dass** die Blasform (6) an der Innenfläche (14) der Aussparung (7) eine Vertiefung (15) aufweist und der Flanschabschnitt (13) des Funktionselementes (5) in die Vertiefung (15) eingesetzt wird.

6. Verfahren nach Anspruch 5, **dadurch gekennzeichnet, dass** die Form der Vertiefung (15) an die Form des Flanschabschnittes (13) angepasst ist, sodass das Funktionselement (5) während des Blasformens in der Vertiefung (15) gehalten wird.

7. Verfahren nach einem der vorherigen Ansprüche, **dadurch gekennzeichnet, dass** das Funktionselement (5) aus polymerem Material ausgebildet ist und eine Glasübergangstemperatur aufweist, die in einem für das Blasformen des Vorformlings (8) erforderlichen Temperaturbereich liegt.

8. Verfahren nach einem der vorherigen Ansprüche, **dadurch gekennzeichnet, dass** sich der Vorformling (8) mit dem zumindest einen Funktionselement (5) durch das Blasformen stoffschlüssig und/oder formschlüssig verbindet.

9. Verfahren nach einem der vorherigen Ansprüche, **dadurch gekennzeichnet, dass** an dem zumindest einen Funktionselement (5), bevorzugt an dem Flanschabschnitt (13), wenigstens eine dem Vorformling (8) zugeordnete Ausnehmung (16) vorgesehen ist, in welche ein Abschnitt des Vorformlings (8) durch das Blasformen eingeformt wird, um eine stoffschlüssige und/oder formschlüssige Verbindung zwischen dem Vorformling (8) und dem zumindest einen Funktionselement (5) auszubilden.

10. Verfahren nach einem der vorherigen Ansprüche, **dadurch gekennzeichnet, dass** an dem zumindest einen Funktionselement (5), bevorzugt an dem Flanschabschnitt (13), wenigstens ein dem Vorformling (8) zugeordneter Vorsprung (18) ausgebildet ist, an welchen ein Abschnitt des Vorformlings (8) durch das Blasformen angeformt wird, um eine stoffschlüssige und/oder formschlüssige Verbindung zwischen dem Vorformling (8) und dem zumindest einen Funktionselement (5) auszubilden.

11. Verfahren nach einem der vorherigen Ansprüche, **dadurch gekennzeichnet, dass** die Aussparung (7) zwischen wenigstens zwei Werkzeughälften (6a, 6b) der Blasform (6) ausgebildet ist, sodass das Funktionselement (5) zwischen den wenigstens zwei Werkzeughälften (6a, 6b) gehalten wird.

12. Verfahren nach einem der vorherigen Ansprüche, **dadurch gekennzeichnet, dass** der Grundkörper (3) durch das Blasformen ein Wellrohr ausbildet.

13. Verfahren nach einem der vorherigen Ansprüche, **dadurch gekennzeichnet, dass** das Funktionselement (5) einen Anschluss und/oder einen Abzweig ausbildet, wobei das Funktionselement (5) strömungsleitend mit dem Kanal (4) in Verbindung steht.

14. Rohranordnung (2), erhältlich nach einem Verfahren gemäß einem der vorherigen Ansprüche.

15. Rohranordnung nach Anspruch 14, **dadurch gekennzeichnet, dass** der Grundkörper (3) als Wellrohr ausgebildet ist, wobei der in dem Grundkörper (3) ausgebildete Kanal (4) über eine Durchgangsöffnung (10) strömungsleitend mit dem zumindest einen Funktionselement (5) verbunden ist.

16. Rohranordnung nach Anspruch 15, **dadurch gekennzeichnet, dass** die Durchgangsöffnung (10) durch das Blasformen gebildet ist.
